# EUROPEAN PATENT SPECIFICATION

(11) **EP 2 804 278 B1**
(45) Date of publication and mention of the grant of the patent: **28.09.2016**
(21) Application number: 14167929.0
(22) Date of filing: 12.05.2014
(51) Int. Cl.: H02H 9/04, H02H 1/06

(54) **Self-power circuit for protecting relay**
Eigenbetriebene Schaltung zum Schutz eines Relais
Circuit autoalimenté pour relais de protection

(30) Priority: 13.05.2013 KR 20130053838
(43) Date of publication of application: 19.11.2014
(73) Proprietor: LSIS Co., Ltd., Anyang-si, Gyeonggi-do 431-848 (KR)
(72) Inventor: Ahn, Hong Seon, Chungcheongbuk-do (KR)
(74) Representative: Awapatent AB

(56) References cited:
- US-A- 5 808 847
- US-A1- 2007 152 648
- US-B1- 6 246 562

## Description

### BACKGROUND OF THE INVENTION

### 1. Field of the Invention

The present disclosure relates to a protecting relay, and particularly, to a self-power circuit for a protecting relay directly delivering electric power source from an electric power system as a monitoring target.

### 2. Background of the Invention

In an electric power system, a circuit breaker or a switchgear is used to separate a section or isolate a fault current, and such a circuit breaker or a switchgear includes a protecting relay as a controller for performing electrical controlling such as detection of a fault current and controlling circuit breaking, for example.

In general, a protecting relay has a Direct Current(abbreviated as DC hereinafter) power source device using a battery, and some protecting relays has a self-power supply configuration for securing self-power source from an Alternating Current(abbreviated as AC hereinafter) input current from a current transformer that provides measurement information of an electric power system, and this type of protecting relay is known as a self-power type protecting relay.

The present disclosure relates to such a self-power type protecting relay.

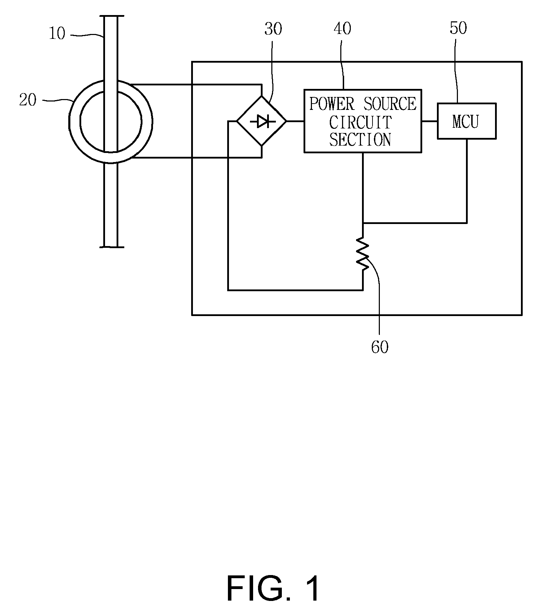

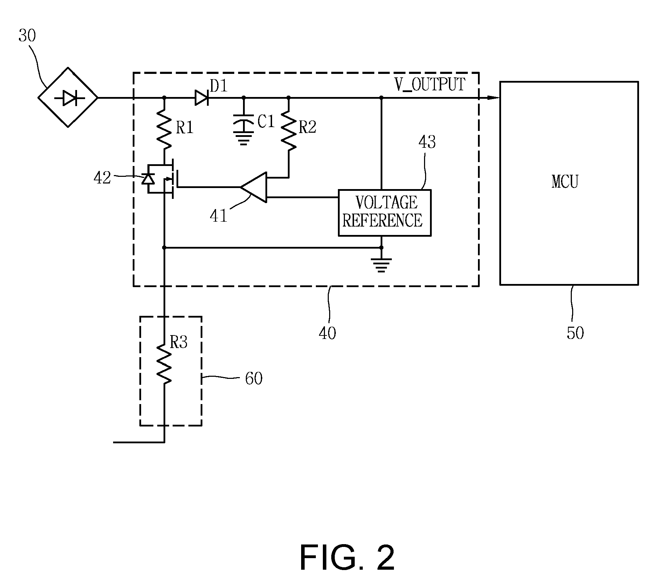

An example of a related art with respect to self-power circuit for a protecting relay will be described with reference to FIGS. 1 and 2.

FIG. 1 is a block diagram schematically illustrating a configuration of a self-power circuit for a protecting relay according to an example of a related art, and FIG. 2 is a detailed circuit diagram of the self-power circuit of FIG. 1.

As illustrated in FIG. 1, the self-power circuit for a protecting relay according to an example of a related art includes a rectifying circuit section 30 and a power source circuit section 40.

In FIG. 1, reference numeral 20 designates a current transformer installed in a power line 10 of an electric power system to detect an amount of current flowing through the power line 10 and provide the detected amount of current. Reference numeral 50 designates a microcomputer unit (abbreviated as MCU hereinafter) determining whether an accident current such as electric shortage current or overcurrent has occurrence in the electric power system based on a detected current or a detected voltage in a protecting relay and outputting an interruption control signal (in other words trip control signal) to a circuit breaker. Reference numeral 60 designates a resistor converting a detection current signal from the current transformer 20 into a proportional voltage.

The rectifying circuit section 30 receives an AC current of the detection current signal from the current transformer 20, rectifies the received AC current into a DC current, and provides the same. The rectifying circuit is generally configured by a bridge diode.

The power source circuit section 40 is a circuit preventing a voltage supplied to the MCU 50 of the protecting relay from being increased to a level exceeding a required level, and a detailed configuration thereof is illustrated in FIG. 2.

As illustrated in FIG. 2, the power source circuit section 40 may include a comparator 41 and a semiconductor switch 42 controlled to be turned on or off by the comparator 41.

The power source circuit section 40 of FIG. 2 may further include a first resistor R1, a diode D1, a capacitor C1, a second resistor R2, and a reference voltage generating circuit section 43.

Here, the first resistor R1 is a current limiting resistor for limiting an amount of current flowing toward the semiconductor switch 42, and the diode D1 is a back flow preventing diode for blocking a current from flowing backwards to the rectifying circuit 30.

The capacitor C1 is a smoothing and constant voltage supplying capacitor for smoothing a DC current flowing through the diode D1 from the rectifying circuit 30 to provide a DC output voltage Voutput as a predetermined constant voltage, and the second resistor R2 is a resistor for converting the DC current flowing through the diode D1 from the rectifying circuit 30 into a voltage signal and providing the same.

The second resistor R2 is a voltage forming resistor for burdening the DC current from the capacitor C1 to provide an output voltage value of the power source circuit section 40 to the comparator 41.

The reference voltage generating circuit section 43 is a circuit section for providing a pre-set overvoltage preventing reference voltage in order to prevent a voltage supplied to the MCU 50 from being increased to a level exceeding a required level. The reference voltage generating circuit section 43 provides a corresponding reference voltage as an input to the comparator 41. The reference voltage provided by the reference voltage generating circuit section 43 may be determined to correspond to a operating voltage of the MCU 50.

The comparator 41 compares the output voltage value from the power source circuit section 40 provided from the second resistor R2 with the reference voltage value input from the reference voltage generating circuit section 43, and when the output voltage value of the power source circuit section 40 is not smaller than the reference voltage value, the comparator 41 outputs a control signal for turning on the semiconductor switch 42. When the output voltage value of the power source circuit section 40 is smaller than the reference voltage value, the comparator 41 does not output a control signal for turning on the semiconductor switch 42.

The semiconductor switch 42 is controlled to be turned on or off by the control signal from the comparator 41. Namely, the semiconductor switch 42 is turned on by the control signal for turning on the semiconductor switch 42, and when the control signal for turning on the semiconductor switch 42 is not output from the comparator 41, the semiconductor switch 42 is turned off.

Hereinafter, operations of the self-power circuit for a protecting relay according to the related art configured by described above will be described with reference to FIGS. 1 and 2.

When the rectifying circuit section 30 receives an AC current of a detection current signal from the current transformer 20, rectifies the AC current into a DC current, and provides the DC current, the corresponding DC current is smoothed into a predetermined DC voltage according to charging and discharging of the capacitor C1 and supplied as an output voltage Vout of the power source circuit section 40 to the MCU 50.

When the rectifying circuit section 30 continuously rectifies the AC current into a DC current and provides the DC current, the voltage output Vout of the power source circuit section 40 is continuously increased to above the working voltage of the MCU 50.

Then, the output voltage value of the power source circuit section 40 provided from the second resistor R2 is not smaller than (namely, equal to or greater than) the reference voltage value input from the reference voltage generating circuit section 43, and thus, the comparator 41 outputs the control signal for turning on the semiconductor switch 42.

Thus, as the semiconductor switch 42 is turned on, the DC current from the rectifying circuit section 30 is bypassed to flow to a ground, and no current flows to the MCU 50 anymore.

In this state, the MCU consumes a current, so the output voltage Vout of the power source circuit section 40 is reduced to be smaller than the reference voltage value.

Then, the comparator 41 does not output a control signal for turning on the semiconductor switch 42, and thus, the semiconductor switch 42 is turned off and a current flows to the MCU 50 again.

This operation may be repeated to supply a predetermined DC voltage not exceeding the working voltage of the MCU 50 to the MCU 50.

However, in the self-power circuit for a protecting relay according to the related art as described above, the first resistor R1 is used to limit an amount of current flowing from a disturbance current such as an transient current or a surge current from the current transformer 20 toward the semiconductor switch 42 to protect the semiconductor switch 42, but in this case, since the first resistor R1 is designed as having a resistance value as small as a few milliohm (mΩ) to work only for a current below tens of amperes without damage.

Thus, if a current having larger than tens of amperes flows to the first resistor R1, the first resistor R1 may be damaged to cause damage to the MCU 50 in the rear stage. This problem may arise although the semiconductor switch 42 has large capacity.

US 6,246,562 discloses a control device of an electromagnet comprising a holding coil connected in series with an electronic switch to the terminals of a supply voltage of the coil.

### SUMMARY OF THE INVENTION

Therefore, an aspect of the present disclosure is to provide a self-power circuit for a protecting relay capable of being stably operated without damaging a circuit element even with an input current at the level of tens of amperes to a hundred amperes.

To achieve these and other advantages a self-power circuit is presented, as defined in the appended independent claim 1.

According to one embodiment the self-power circuit for a protecting relay may further comprising:
a second bi-directional diode connected in parallel to the inductor and having one end connected to a ground, and turned on, when a voltage of the inductor formed by an initial surge current is not lower than a predetermined voltage, to discharge the increased voltage of the inductor to the ground so as to resolve the voltage, to thus protect the power source circuit section and the microcomputer unit of the protecting relay from the initial surge current.

According to still another embodiment, each of the first and second bi-directional diodes is configured by a pair of diodes, connected in series in the mutually opposite directions.

According to still another embodiment, the diodes are configured by Zener diodes or transient voltage suppressor diodes.

The inductor may be formed by a winding coil having a thickness allowing a current of 100 amperes to flow therethrough.

Further scope of applicability of the present application will become more apparent from the present disclosure given hereinafter. However, it should be understood that the present disclosure and specific examples, while indicating preferred embodiments of the invention, are given by way of illustration only, since various changes and modifications within the scope of the invention will become apparent to those skilled in the art from the detailed description.

### BRIEF DESCRIPTION OF THE DRAWINGS

The accompanying drawings, which are included to provide a further understanding of the invention and are incorporated in and constitute a part of this disclosure, illustrate exemplary embodiments and together with the description serve to explain the principles of the invention.

In the drawings:
FIG. 1 is a block diagram schematically illustrating a self-power circuit for a protecting relay according to an example of a related art;
FIG. 2 is a circuit diagram illustrating a detailed circuit configuration of the self-power circuit of FIG. 1; and
FIG. 3 is a block diagram illustrating a configuration of a self-power circuit for a protecting relay according to an exemplary embodiment of the present disclosure.

### DETAILED DESCRIPTION OF THE INVENTION

Description will now be given in detail of the exemplary embodiments, with reference to the accompanying drawings. For the sake of brief description with reference to the drawings, the same or equivalent components will be provided with the same reference numbers, and description thereof will not be repeated.

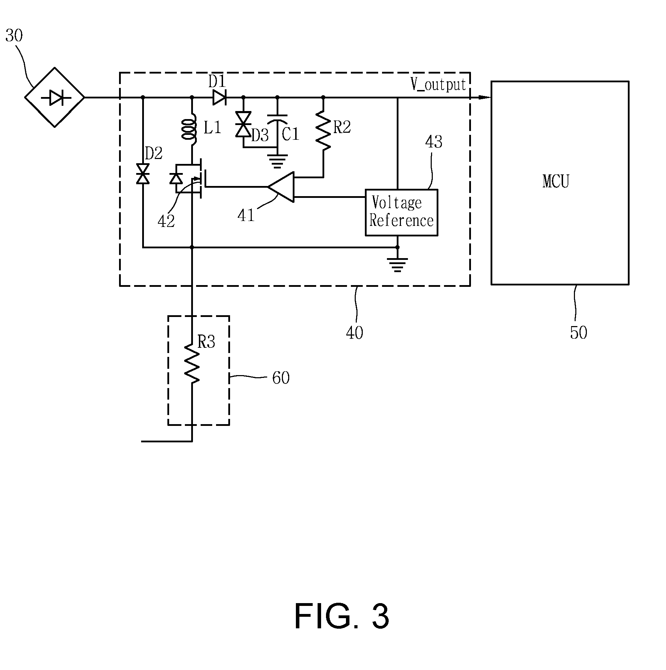

A self-power circuit for a protecting relay according to an exemplary embodiment of the present disclosure will be described with reference to FIG. 3 as a block diagram illustrating a configuration of the self-power circuit.

The self-power circuit for a protecting relay according to an exemplary embodiment of the present disclosure includes a rectifying circuit section 30 and a power source circuit section 40.

In FIG. 3, a current transformer (please refer to reference numeral 20 of FIG. 1) installed in a power line (please refer to reference numeral 10 of FIG. 1) of an electric power system to detect an amount of current flowing through the power line and provide the same is omitted in the drawing.

In FIG. 3, reference numeral 50 designates a microcomputer unit (abbreviated as MCU hereinafter) determining whether a fault current has occurred in an electric power system based on a detection current or a detection voltage, and outputting an interruption control signal(in other words a circuit opening control signal or a trip signal) to a circuit breaker, and reference numeral 60 designates a measurement burden resistor (in other words a resistor for voltage forming) converting a detection current signal from the current transformer into a proportional voltage signal and providing the same.

The measurement burden resistor 60 is connected to the MCU 50 to provide the voltage signal (not shown) (please refer to FIG. 1).

The rectifying circuit section 30 receives an AC current of the detection current signal from the current transformer 20, rectifies the received AC current, and provides the same. The rectifying circuit section 30 can be configured by a bridge diode.

The power source circuit section 40 is a circuit that basically applies DC power required for the MCU 50 of the protecting relay, as a constant voltage. The power source circuit section 40 serves to prevent a supplied voltage from being increased to a level exceeding a required level.

As illustrated in FIG. 3, the power source circuit section 40 may include a comparator 41 and a semiconductor switch 42 controlled to be turned on or off by the comparator 41.

Here, the semiconductor switch 42 may be configured by an n-channel metal oxide semiconductor field effect transistor (so called as abbreviated MOSFET), or a semiconductor switch including a thyristor, an insulated gate bipolar transistor (so called as abbreviated IGBT), and the like.

The comparator 41 compares the output voltage value from the power source circuit section 40 provided from the second resistor R2 with the reference voltage value input from the reference voltage generating circuit section 43, and when the output voltage value of the power source circuit section 40 is not smaller than the reference voltage value, the comparator 41 outputs a control signal for turning on the semiconductor switch 42. When the output voltage value of the power source circuit section 40 is smaller than the reference voltage value, the comparator 41 does not output a control signal for turning on the semiconductor switch 42.

The semiconductor switch 42 is controlled to be turned on or off by the control signal from the comparator 41. Namely, the semiconductor switch 42 is turned on by the control signal for turning on the semiconductor switch 42, and when the control signal for turning on the semiconductor switch 42 is not output from the comparator 41, the semiconductor switch 42 is turned off.

The power source circuit section 40 of FIG. 3 further includes: an inductor L1, a diode D1, a capacitor C1, a resistor R2, a reference voltage generating circuit section 43, a second bi-directional diode D2, and a first bi-directional diode D3.

The inductor L1 is connected to the semiconductor switch 42 of the power source circuit section 40 in series. When DC current supplied from the rectifying circuit section 30 is rapidly increased, the inductor L1 may interrupts the DC current until when magnetically saturated according to general characteristics thereof, and after the magnetic saturation, the inductor L1 gradually increases the DC current to flow, and in this case, a voltage across the inductor L1 is increased by the DC current.

According to an preferred embodiment of the present disclosure, the inductor L1 is formed by a winding coil having a thickness sufficient for a current of a hundred amperes to flow therein.

The diode D1 is a back flow preventing diode for blocking a current from flowing backwards to the rectifying circuit 30.

The capacitor C1 is a smoothing and constant voltage supplying capacitor smoothing a DC current flowing through the diode D1 from the rectifying circuit 30 to provide a DC output voltage Vout as a predetermined constant voltage.

The second resistor R2 is a resistor converting the DC current flowing through the diode D1 from the rectifying circuit 30 into a voltage signal and providing the same.

The second resistor R2 is a voltage forming resistor burdening the DC current from the capacitor C1 to provide an output voltage value of the power source circuit section 40 to the comparator 41.

The reference voltage generating circuit section 43 is a circuit section providing a predetermined (that is a preset) overvoltage preventing reference voltage in order to prevent a voltage supplied to the MCU 50 from being increased to a level exceeding a required level. The reference voltage generating circuit section 43 provides a corresponding reference voltage as an input to the comparator 41. The reference voltage provided by the reference voltage generating circuit section 43 may be determined to correspond to a working voltage of the MCU 50.

The second bi-directional diode D2 is connected to the inductor L1 in parallel and an end thereof is connected to a ground, in order to protect the power source circuit section 40 and the MCU 50 of the protecting relay from an initial surge current.

When a voltage of the inductor L1 formed by the initial surge current is not lower than a pre-determined voltage, namely, when the voltage of the inductor L1 is higher than or equal to the predetermined voltage, the second bi-directional diode D2 is turned on to discharge the increased voltage across the inductor L1 to the ground so as to be resolved. Here, the predetermined voltage is a threshold voltage of the second bi-directional diode D2.

The first bi-directional diode D3 is connected between an output terminal of the power source circuit section 40 and a ground.

In a case that the rectifying circuit section 30 continuously supplies the DC current and the MCU 50 consume only a small amount of power, the DC voltage supplied from the power source circuit section 40 to the MCU 50 of the protecting relay, namely, the output voltage Vout of the power source circuit section 40, is rapidly increased. In this case, as the increased output voltage Vout exceeds the threshold voltage, the first bi-directional diode D3 is turned on to form a bypass path of the current. Accordingly, the DC current flowing from the rectifying circuit 30 to the MCU 50 flows to a ground through the first bi-directional diode D3 so as to be used up, and thus, the DC voltage supplied to the MCU 50, namely, the output voltage Vout of the power source circuit section 40, is reduced.

According to a preferred embodiment of the present disclosure, the first bi-directional diode D3 and the second bi-directional diode D2, as a pair of diodes respectively, are configured to be connected in series in the mutually opposite directions. Thus, a current flow in both directions may be cut off until when the threshold voltages of the first bi-directional diode D3 and the second bi-directional diode D2 reach threshold voltages thereof respectively, and when an overvoltage exceeding the threshold voltages is formed on the inductor L1 or formed as the output voltage Vout of the power source circuit section 40, the first bi-directional diode D3 and the second bi-directional diode D2 may be turned on to consume the overvoltage.

According to an exemplary embodiment of the present disclosure, the first bi-directional diode D3 and the second bi-directional diode D2 are configured by a Zener diode, respectively. Thus, effects of cutting off a current flow in both directions until when threshold voltages of the first bi-directional diode D3 and the second bi-directional diode D2, formed as Zener voltages, reach Zener voltages, respectively, and being turned on, when an overvoltage exceeding the Zener voltages is formed in the inductor L1 or the output voltage Vout of the power source circuit section 40, to consume the same may be obtained.

In the present disclosure, the first bi-directional diode D3 and the second bi-directional diode D2 may be configured by transient voltage suppressor (abbreviated as TVS hereinafter) diodes.

Meanwhile, operations of the self-power circuit for a protecting relay according to the exemplary embodiment of the present disclosure configured by described above will be described with reference to FIG. 3.

When the rectifying circuit section 30 receives an AC current of a detection signal from the current transformer (not shown but can refer to reference numeral 20 of FIG. 1), rectifies the AC current into a DC current, and provides the DC current, the corresponding DC current is smoothed into a constant DC voltage according to charging and discharging of the capacitor C1 and supplied as an output voltage Vout of the power source circuit section 40 to the MCU 50.

When the rectifying circuit section 30 continuously rectifies the AC current into a DC current and provides the DC current and the MCU 50 consumes only a small amount of the electric power, the voltage output Vout of the power source circuit section 40 is continuously increased to above a working voltage of the MCU 50.

Then, the output voltage value of the power source circuit section 40 provided from the second resistor R2 is not smaller than (namely, equal to or greater than) the reference voltage value input from the reference voltage generating circuit section 43, and thus, the comparator 41 outputs the control signal for turning on the semiconductor switch 42.

Thus, as the semiconductor switch 42 is turned on, the DC current from the rectifying circuit section 30 is bypassed to flow to a ground, and no current flows to the MCU 50 anymore.

In this state, the output voltage Vout of the power source circuit section 40 is reduced to be smaller than the reference voltage value.

Then, the comparator 41 does not output a control signal for turning on the semiconductor switch 42, and thus, the semiconductor switch 42 is turned off and a current flows to the MCU 50 again.

This operation may be repeated to supply a predetermined DC voltage not exceeding the working voltage of the MCU 50 to the MCU 50.

Besides the normal state, for example, if a detection current at the level of tens of amperes to hundreds of amperes is input from the current transformer, electric power consumption of the MCU 50 is small, and a turn-on control speed of the semiconductor switch 42 by the comparator 41 is not very fast, then, the output voltage value of the power source circuit section 40 may be increased to be excessively high.

Even in this case, since the self-power circuit for a protecting relay according to the exemplary embodiment of the present disclosure includes the first bi-directional diode D3 which is turned on when the DC voltage supplied to the MCU 50 of the protecting relay from the power source circuit section 40, namely, the output voltage Vout of the power source circuit section 40, is rapidly increased, a bypass path of the current flowing through the first bi-directional diode D3 to a ground is formed to promptly reduce the rapidly increased DC voltage, and thus, the power source circuit section 40 and the MCU 50 may be protected from the increased output voltage Vout of the power source circuit section 40 due to a large detection current from the current transformer at the level of tens of amperes to hundreds of amperes.

Also, when a voltage of the inductor L1 formed by an initial surge current is not lower than a predetermined voltage, namely, when the voltage of the inductor L1 is equal to or greater than a predetermined threshold voltage of the second bi-directional diode D3, the second bi-directional diode D3 may be turned on to discharge the increased voltage of the inductor L1 to a ground to resolve it.

As described above, since the self-power circuit for a protecting relay according to the exemplary embodiment of the present disclosure includes the inductor connected to the semiconductor switch of the power source circuit section in series to gradually increase a DC current to flow and to have a voltage across the inductor increased when the DC current supplied from the rectifying circuit section is rapidly increased, the self-power circuit and the MCU of the protecting relay may be protected from the rapidly increased DC current supplied from the rectifying circuit section due to an introduction of an initial surge current.

Also, since the self-power circuit for a protecting relay according to the exemplary embodiment of the present disclosure includes the first bi-directional diode turned on when the DC voltage supplied to the MCU of the protecting relay from the power source circuit section is rapidly increased, a bypass path of the current may be formed through the first bi-directional diode to reduce the increased DC voltage.

In addition, since the self-power circuit for a protecting relay according to the exemplary embodiment of the present disclosure includes the second bi-directional diode, which is connected to the inductor in parallel and has one end connected to a ground, and which is turned on when a voltage of the inductor formed by an initial surge current is not higher than a predetermined voltage to discharge the increased voltage of the inductor to the ground to resolve it, the power source circuit section and the MCU of the protecting relay may be protected from the initial surge current.

In the self-power circuit for a protecting relay according to the exemplary embodiment of the present disclosure, since each of the first bi-directional diode and the second bi-directional diode is configured by a pair of diodes which are connected in the mutually opposite directions, a current flow in both directions may be cut off until when it reaches the threshold voltages of each of the pair diodes, and when an overvoltage exceeding the threshold voltages is formed as the output voltage of the inductor or the power source circuit section, the first bi-directional diode or the second bi-directional diode may be turned on to consume the overvoltage.

The foregoing embodiments and advantages are merely exemplary and are not to be considered as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims, or equivalents of such metes and bounds are therefore intended to be embraced by the appended claims.

## Claims

1. A self-power circuit for a protecting relay, **characterized in that** the self-power circuit comprising:
a rectifying circuit section (30) configured to rectify an alternating current from a current transformer (20) that detects amount of an electric current flowing through an electric power line (10) of an electric power system;
a power source circuit section (40) connected to an output terminal of the rectifying circuit section (30) and configured to include a comparator (41) comparing whether an output voltage from the rectifying circuit section (30) exceeds a reference voltage and a semiconductor switch (42) at a first end connected to a ground and configured to be switched by an output from the comparator (41), the power source circuit section is configured to supply the output voltage from the rectifying circuit section (30)
as a constant voltage to a microcomputer unit (50) of the protecting relay; the self-power circuit is **characterised in that** it further comprises:
an inductor (L1) connected to the semiconductor switch (42) of the power source circuit section (40) in series and between the output terminal of the rectifying circuit section (30) and a second end of the semiconductor switch (42), wherein the inductor (L1) is configured to, when a direct current supplied from the rectifying circuit section (30) is rapidly increased, gradually increase the direct current to flow to thus have an increased voltage thereacross; and
a first bi-directional diode (D3) connected between an output terminal of the power source circuit section (40) and a ground and turned on to form a bypass path of an electric current when a direct current voltage supplied from the power source circuit section (40) to the microcomputer unit (50) of the protecting relay is rapidly increased.

2. The self-power circuit of claim 1, further comprising:
a second bi-directional diode (D2) connected in parallel to the inductor (L1) and having one end connected to a ground, and turned on, when a voltage of the inductor (L1) formed by an initial surge current is not lower than a predetermined voltage, to discharge the increased voltage of the inductor (L1) to the ground so as to resolve the voltage, to thus protect the power source circuit section (40) and the microcomputer unit (50) of the protecting relay from the initial surge current.

3. The self-power circuit of claim 2, wherein each of the first and second bi-directional diodes (D3, D2) is configured by a pair of diodes, connected in series in the mutually opposite directions.

4. The self-power circuit of claim 3, wherein the diodes are configured by Zener diodes or transient voltage suppressor diodes.

5. The self-power circuit of claim 1, wherein the inductor (L1) is formed by a winding coil having a thickness allowing a current of one hundred amperes to flow therethrough.

## Patentansprüche

1. Eigenbetriebene Schaltung für ein Schutzrelais, **dadurch gekennzeichnet, dass** die eigenbetriebene Schaltung umfasst:
einen Gleichrichterschaltungsabschnitt (30), der dafür ausgelegt ist, einen Wechselstrom von einem Stromtransformator (20) gleichzurichten, welcher eine Größe eines elektrischen Stroms erkennt, der durch eine Stromleitung (10) eines Stromversorgungssystems fließt;
einen Stromquellenschaltungsabschnitt (40), der mit einem Ausgangsanschluss des Gleichrichterschaltungsabschnitts (30) verbunden ist und so gestaltet ist, dass er einen Komparator (41), der vergleicht, ob eine Ausgangsspannung von dem Gleichrichterschaltungsabschnitt (30) eine Referenzspannung überschreitet, und einen Halbleiterschalter (42), der an einem ersten Ende mit einer Masse verbunden ist und dafür ausgelegt ist, durch einen Ausgang von dem Komparator (41) geschaltet zu werden, aufweist, wobei der Stromquellenschaltungsabschnitt dafür ausgelegt ist, die Ausgangsspannung von dem Gleichrichterschaltungsabschnitt (30) als eine konstante Spannung einer Mikrocomputereinheit (50) des Schutzrelais zuzuführen;
wobei die eigenbetriebene Schaltung **dadurch gekennzeichnet ist, dass** sie ferner umfasst:
eine Induktivität (L1), die mit dem Halbleiterschalter (42) des Stromquellenschaltungsabschnitts (40) in Reihe und zwischen den Ausgangsanschluss des Gleichrichterschaltungsabschnitts (30) und ein zweites Ende des Halbleiterschalters (42) geschaltet ist, wobei die Induktivität (L1) dafür ausgelegt ist, wenn ein von dem Gleichrichterschaltungsabschnitt (30) zugeführter Gleichstrom schnell erhöht wird, allmählich den Gleichstrom, welcher durch sie fließt, zu erhöhen, sodass eine erhöhte Spannung über ihr vorliegt; und
eine erste bidirektionale Diode (D3), die zwischen einen Ausgangsanschluss des Stromquellenschaltungsabschnitts (40) und eine Masse geschaltet ist und eingeschaltet wird, um einen Umgehungspfad eines elektrischen Stroms zu bilden, wenn eine Gleichspannung, die von dem Stromquellenschaltungsabschnitt (40) der Mikrocomputereinheit (50) des Schutzrelais zugeführt wird, schnell erhöht wird.

2. Eigenbetriebene Schaltung nach Anspruch 1, welche ferner umfasst:
eine zweite bidirektionale Diode (D2), die zu der Induktivität (L1) parallelgeschaltet ist und ein Ende aufweist, das mit einer Masse verbunden ist, und die eingeschaltet wird, wenn eine Spannung der Induktivität (L1), die von einem anfänglichen Stoßstrom gebildet wird, nicht niedriger als eine vorgegebene Spannung ist, um die erhöhte Spannung der Induktivität (L1) zur Masse zu entladen, um die Spannung abzuleiten, um somit den Stromquellenschaltungsabschnitt (40) und die Mikrocomputereinheit (50) des Schutzrelais vor dem anfänglichen Stoßstrom zu schützen.

3. Eigenbetriebene Schaltung nach Anspruch 2, wobei die erste und die zweite bidirektionale Diode (D3, D2) jeweils als ein Paar von Dioden ausgebildet sind, die in den zueinander entgegengesetzten Richtungen in Reihe geschaltet sind.

4. Eigenbetriebene Schaltung nach Anspruch 3, wobei die Dioden als Zenerdioden oder Suppressordioden ausgebildet sind.

5. Eigenbetriebene Schaltung nach Anspruch 1, wobei die Induktivität (L1) von einer Wicklungsspule mit einer Dicke gebildet wird, die einen Stromfluss durch sie von einhundert Ampere ermöglicht.

## Revendications

1. Circuit autoalimenté pour relais de protection, **caractérisé en ce que** le circuit autoalimenté comprend :
une section de circuit redresseur (30) configuré pour redresser un courant alternatif provenant d'un transformateur de courant (20) qui détecte une quantité d'un courant électrique circulant à travers une ligne d'alimentation électrique (10) d'un système d'alimentation électrique ;
une section de circuit source d'alimentation électrique (40) connectée à une borne de sortie de la section de circuit redresseur (30) et configurée pour inclure un comparateur (41) comparant si une tension de sortie de la section de circuit redresseur (30) dépasse une tension de référence et un commutateur à semi-conducteur (42) à une première extrémité connectée à une masse configurée pour être commuté par une sortie du comparateur (41), la section de circuit source d'alimentation électrique est configurée pour alimenter la tension de sortie à partir de la section de circuit redresseur (30) comme une tension constante à une unité micro-informatique (50) du relais de protection ;
le circuit autoalimenté est **caractérisé en ce qu'**il comprend en outre :
un inducteur (L1) connecté au commutateur à semi-conducteur (42) de la section de circuit source d'alimentation électrique (40) en série et entre la borne de sortie de la section de circuit redresseur (30) et une seconde extrémité du commutateur à semi-conducteur (42), dans lequel l'inducteur (L1) est configuré pour, lorsqu'un courant direct alimenté de la section de circuit redresseur (30) augmente rapidement, augmenter graduellement le courant direct circulant de manière à avoir une tension accrue au travers de ce dernier ; et
une première diode bidirectionnelle (D3) connectée entre une borne de sortie de la section de circuit de source d'alimentation électrique (40) et une masse et mise sous tension de manière à former un trajet de dérivation d'un courant électrique lorsqu'une tension de courant direct alimentée à partir de la section de circuit source d'alimentation électrique (40) dans l'unité micro-informatique (50) du relais de protection augmente rapidement.

2. Circuit autoalimenté selon la revendication 1, comprenant en outre :
une seconde diode bidirectionnelle (D2) connectée en parallèle à l'inducteur (L1) et ayant une extrémité connectée à une masse et mise sous tension lorsqu'une tension de l'inducteur (L1) formée par un pic de courant initial n'est pas inférieure a à une tension prédéterminée, afin de décharger la tension accrue de l'inducteur (L1) vers la masse de manière à résoudre la tension, pour protéger ainsi la section de circuit de source d'alimentation électrique (40) et l'unité micro-informatique (50) du relais de protection contre le pic de courant initial.

3. Circuit autoalimenté selon la revendication 2, dans lequel chacune de la première et la seconde diode bidirectionnelle (D3, D2) est configurée par une paire de diodes, connectées en série dans les directions mutuellement opposées.

4. Circuit autoalimenté selon la revendication 3, dans lequel les diodes sont configurées par des diodes Zener ou des diodes de suppression de tension transitoire.

5. Circuit autoalimenté selon la revendication 1, dans lequel l'inducteur (L1) est formé par une bobine d'enroulement ayant une épaisseur permettant à un courant d'une centaine d'ampères de circuler à travers celle-ci.
